# FASCICULE DE BREVET EUROPEEN

(11) **EP 3 546 789 B1**
(45) Date de publication et mention de la délivrance du brevet: **07.10.2020**
(21) Numéro de dépôt: 19164315.4
(22) Date de dépôt: 21.03.2019
(51) Int. Cl.: F16F 13/08, B64C 27/51

(54) **AMORTISSEUR HYDRO-ELASTIQUE, ET AERONEF**
HYDROELASTISCHER STOSSDÄMPFER, UND LUFTFAHRZEUG
HYDRO-ELASTIC SHOCK ABSORBER, AND AIRCRAFT

(30) Priorité: 30.03.2018 FR 1870369
(43) Date de publication de la demande: 02.10.2019
(73) Titulaire: AIRBUS HELICOPTERS, 13725 Marignane Cedex (FR)
(72) Inventeur: BIHEL, Jean-Romain, 13740 LE ROVE (FR); SEQUERA, Damien, 41089 DOS HERMANAS (ES); JALAGUIER, Jean-Pierre, 13127 VITROLLES (FR)
(74) Mandataire: GPI & Associés

(56) Documents cités:
- FR-A1- 2 592 696
- US-A1- 2012 230 823
- US-A1- 2016 223 044

## Description

La présente invention a pour objet un amortisseur hydro-élastique, et un aéronef comprenant au moins un amortisseur hydro-élastique de ce type.

L'invention se rapporte au domaine technique général de l'amortissement des mouvements d'un système mécanique et plus particulièrement des équipements comportant des systèmes d'amortissement utilisés dans l'aéronautique.

L'invention trouve son application tout particulièrement dans des amortisseurs de traînée utilisés sur un rotor de sustentation de giravion, et notamment d'un hélicoptère. L'invention se situe dès lors dans le domaine technique restreint des amortisseurs de traînée.

Sur un rotor d'hélicoptère, un dispositif d'amortissement peut relier chaque pale au moyeu du rotor ou peut relier deux pales consécutives entre elles. Un tel dispositif d'amortissement est notamment connu sous l'expression « amortisseur de traînée » ou parfois « adaptateur de fréquences à amortissement incorporé ».

En effet, la superposition du mouvement de battement vertical des pales et le mouvement d'entraînement rotatif des pales autour de l'axe de rotation du rotor induit l'apparition d'une force de Coriolis, à savoir d'une force périodique qui fait osciller les pales dans leur plan de rotation. Par suite, un dispositif d'amortissement lié à une pale d'un rotor de giravion permet en premier lieu d'amortir les oscillations de la pale lors de son mouvement en traînée. La raideur propre du dispositif d'amortissement limite aussi l'amplitude du mouvement de la pale en traînée en vol.

Un tel dispositif d'amortissement peut viser en second lieu à au moins limiter les risques d'apparition de phénomènes de résonance connus sous les expressions « résonance sol » et « résonance air ».

Un dispositif d'amortissement peut présenter une raideur dimensionnée pour que la fréquence propre des pales d'un rotor lors d'un mouvement en traînée soit appropriée afin de satisfaire les exigences dimensionnelles requises pour un fonctionnement optimal du rotor par exemple au regard du phénomène de résonance sol. De plus, le dispositif d'amortissement peut être aussi dimensionné pour amortir les mouvements des pales en traînée afin de limiter les risques d'une entrée en résonance sol lorsque que la fréquence propre en axes fixes des pales du rotor lors d'un mouvement en traînée est égale à une fréquence d'excitation du fuselage de l'aéronef posé sur son train d'atterrissage.

De même, l'amortissement apporté par un dispositif d'amortissement peut participer à une lutte contre le phénomène de résonance air.

Un dispositif d'amortisseur peut alors être dimensionné pour fonctionner selon une loi triple pente qui fournit un effort en fonction du débattement dynamique du dispositif d'amortissement. Cette loi présente trois plages distinctes d'amortissement dépendant de la sollicitation dynamique en déplacement à laquelle l'amortisseur est soumis. En effet, la loi présente un premier tronçon correspondant au fonctionnement requis pour lutter contre le phénomène de résonance sol, un deuxième tronçon correspondant au fonctionnement requis en vol, et un troisième tronçon pour lutter contre le phénomène de résonance air.

Dans ce contexte, un dispositif d'amortissement connu présente uniquement un système hydraulique.

Un autre dispositif d'amortissement connu présente uniquement des organes de rappel élastiques, tels que des ressorts ou de l'élastomère. Un tel dispositif d'amortissement est intéressant pour éviter une entrée en résonance sol. Par exemple, des hélicoptères de faible tonnage peuvent avoir des dispositifs d'amortissement de ce type car ces aéronefs ne nécessitent pas un fort amortissement en vol.

Sur un hélicoptère lourd, un autre type de dispositif d'amortissement dit « mixte » peut être utilisé. Un dispositif d'amortissement mixte prend la forme d'un amortisseur hydro-élastique qui est muni d'un organe élastique et d'un système hydraulique montés en parallèle. Le système hydraulique apporte l'amortissement nécessaire en vol.

Bien qu'efficace, un tel amortisseur hydro-élastique est favorablement agencé entre une pale et un moyeu et non pas entre deux pales. En effet, l'agencement entre deux pales d'un dispositif d'amortissement partiellement hydraulique est délicat en raison de la force centrifuge, résultant de la rotation du rotor, exercée notamment sur les divers organes en mouvement de l'organe élastique. Un dispositif d'amortissement partiellement hydraulique est donc favorablement agencé entre une pale et un moyeu. Toutefois, cet agencement est parfois difficile à obtenir dans un environnement contenant d'autres organes, et par exemple des bielles de pas, et en présence d'un nombre important de pales.

Le document FR 2950027 présente un dispositif comprenant plusieurs blocs d'élastomère.

Le document CN 102501970 décrit aussi un système muni d'une pluralité de blocs d'élastomère.

Un amortisseur hydro-élastique connu est muni d'un système hydraulique et d'un organe élastique agencés en parallèle entre deux organes de liaison.

Un premier organe de liaison est solidaire d'une armature dite « armature intermédiaire ». L'armature intermédiaire comporte un anneau portant un piston.

Un deuxième organe de liaison est solidaire d'une armature dite « armature centrale » et d'une armature dite « armature externe » qui sont disposées radialement de part et d'autre de l'armature intermédiaire. Un bloc annulaire en élastomère de l'organe élastique est solidaire de l'armature intermédiaire et de l'armature externe. A l'inverse, des chambres hydrauliques d'un système hydraulique sont délimitées par l'armature intermédiaire et l'armature centrale.

Un déplacement relatif du premier organe de liaison par rapport au deuxième organe de liaison induit alors une sollicitation conjointe de l'organe élastique et du système hydraulique.

Le document FR 2592696, lequel est considéré comme l'état de la technique le plus proche, décrit un dispositif d'amortissement de ce type.

Le document EP 1000274 présente un amortisseur hydro-élastique.

Le document US 2013/0164131 décrit aussi un amortisseur hydro-élastique. Un premier anneau en élastomère s'étend radialement entre une armature intermédiaire et une armature centrale, et un deuxième anneau en élastomère s'étend radialement entre une armature intermédiaire et une armature externe.

Le document EP 2678222 décrit un amortisseur hydro-élastique muni d'un premier organe de liaison solidaire d'un système hydraulique. Un deuxième organe de liaison est solidaire d'une armature, un organe élastique étant interposé entre l'armature et le système hydraulique. L'organe de liaison et le système hydraulique fonctionnent en série suite à un déplacement du premier organe de liaison par rapport au deuxième organe de liaison, à savoir l'un après l'autre.

Les documents WO 2012/148389, WO 2013/152300, US 2012/230823 et US 2016/223044 sont aussi connus.

La présente invention a alors pour objet de proposer un amortisseur hydro-élastique muni d'un organe élastique et d'un système hydraulique innovant apte à être agencé entre deux pales.

Un tel amortisseur hydro-élastique comprend au moins un ensemble élastique. Cet au moins un ensemble élastique comprend une armature interne et une armature externe mobiles l'une par rapport à l'autre au moins en translation selon un axe longitudinal, notamment lorsque l'amortisseur hydro-élastique est comprimé ou étiré. L'armature externe entoure au moins partiellement l'armature interne, ledit au moins un ensemble élastique comprenant au moins un organe élastique reliant l'armature externe à l'armature interne.

Par exemple, l'armature interne comprend un cylindre interne creux s'étendant le long d'un axe longitudinal d'une extrémité externe vers une extrémité interne, l'armature externe comportant un cylindre externe creux qui s'étend d'une première zone extrémale vers une deuxième zone extrémale, l'extrémité externe ou la première zone extrémale étant obturée par une extrémité de fixation, une tête de liaison étant solidaire de l'extrémité de fixation. L'expression « tête de liaison » désigne un organe de l'amortisseur configuré pour être relié à un élément n'appartenant pas à l'amortisseur, un ensemble sustentateur par exemple.

Cet au moins un ensemble élastique comporte une chambre de compression ayant un volume variable en fonction de la position relative de l'armature interne et de l'armature externe. Cette chambre de compression est par exemple délimitée au moins partiellement par ladite extrémité de fixation ainsi que ledit cylindre interne ou par un bouchon obturant le cylindre interne. Une compression de l'amortisseur hydro-élastique induit une diminution du volume de la chambre de compression alors que l'étirement de l'amortisseur hydro-élastique induit une augmentation du volume de la chambre de compression.

De plus, l'amortisseur hydro-élastique comprend un ensemble d'amortissement comprenant une chambre d'expansion à volume variable, cette chambre d'expansion étant délimitée selon une direction transversale par un fond et un piston, le piston étant mobile en translation selon cette direction transversale. La direction transversale n'est pas parallèle à l'axe longitudinal, voire peut être sensiblement confondue avec la direction suivie par la force centrifuge exercée sur le piston en fonctionnement. Ladite chambre de compression est reliée hydrauliquement à la chambre d'expansion par trois liaisons hydrauliques comprenant respectivement un conduit, au moins un premier passage et un clapet de surpression configuré pour autoriser la circulation du fluide uniquement de la chambre de compression vers la chambre d'expansion et uniquement lorsqu'une pression du fluide dans la chambre de compression dépasse un seuil et donc lorsque l'amortisseur hydro-élastique est comprimé, au moins un deuxième passage et un clapet antiretour configuré pour autoriser la circulation du fluide uniquement de la chambre d'expansion vers la chambre de compression et uniquement lorsqu'une pression du fluide dans la chambre de compression est inférieure à une pression du fluide dans la chambre d'expansion et donc lorsque l'amortisseur hydro-élastique est étiré. Un fluide est agencé dans la chambre de compression et la chambre d'expansion et les diverses liaisons.

Lorsque l'amortisseur hydro-élastique est comprimé ou étiré, l'armature interne et l'armature externe se déplacent l'une par rapport à l'autre en sollicitant l'organe élastique. Le mouvement relatif en translation de l'armature interne et de l'armature externe induit un déplacement du fluide entre la chambre de compression et la chambre d'expansion via au moins une des liaisons.

Plus précisément, lorsque l'amortisseur hydro-élastique est comprimé, une partie du fluide présent dans la chambre de compression se déplace dans la chambre d'expansion via la première liaison munie dudit conduit. Le fluide est laminé en passant par ce conduit de faibles sections. L'amortisseur hydro-élastique se comporte en suivant la première pente de la loi triple pente décrite précédemment. La pression du fluide dans la chambre de compression augmente. Le piston se déplace en allant éventuellement à l'encontre d'une force centrifuge exercée sur ce piston voire en comprimant un ressort de rappel. Le volume de la chambre d'expansion augmente alors afin d'accueillir le fluide provenant de la chambre de compression.

Si la compression se poursuit, dès que la pression du fluide dans la chambre de compression dépasse un seuil prédéterminé, le clapet de surpression s'ouvre partiellement. Le fluide s'échappe de la chambre de compression notamment au travers de la deuxième liaison munie de ce clapet de surpression. La deuxième liaison peut présenter une surface de passage supérieure à la surface de passage du conduit. L'amortisseur hydro-élastique se comporte en suivant la deuxième pente de la loi triple pente décrite précédemment. Le clapet de surpression peut être réglable pour permettre le réglage du seuil prédéterminé.

Si la compression se poursuit, le clapet de surpression continue à s'ouvrir jusqu'à atteindre une ouverture maximale. L'amortisseur hydro-élastique se comporte alors en suivant la troisième pente de la loi triple pente décrite précédemment.

A l'inverse, lorsque l'amortisseur hydro-élastique est étiré, la pression du fluide dans la chambre de compression chute brutalement. Le clapet de surpression se ferme. A l'inverse, le clapet antiretour de la troisième liaison s'ouvre. La chambre d'expansion se vide aussitôt. La force centrifuge exercée sur le piston voire un ressort ou de l'air comprimé permettent de déplacer rapidement le piston afin que le fluide migre rapidement de la chambre d'expansion vers la chambre de compression. Cette disposition peut tendre à éviter un problème de cavitation.

Cet amortisseur hydro-élastique est donc un dispositif d'amortissement mixte qui exerce un amortissement essentiellement en étant comprimé. La chambre de compression n'est pas délimitée par le piston mais peut être délimitée par l'ensemble élastique ou par l'ensemble élastique et l'ensemble d'amortissement, ce qui peut éviter ou limiter l'utilisation de joints dynamiques sensibles à l'usure.

Un tel amortisseur hydro-élastique peut notamment être utilisé en tant qu'amortisseur interpales sur un rotor d'aéronef. Lors du déplacement en traînée des pales, au moins un amortisseur est alors nécessairement comprimé pour apporter de l'amortissement, indépendamment du sens de déplacement en traînée des pales. En effet, chaque pale étant disposée entre deux amortisseurs interpales, au moins un amortisseur interpales fonctionne en compression.

Un tel amortisseur hydro-élastique peut de plus avoir une conception modulaire. Par exemple, l'ensemble élastique et l'ensemble d'amortissement peuvent constituer deux modules pouvant être fixés l'un à l'autre de manière réversible et non destructive, par des vis ou équivalent par exemple.

Un tel amortisseur hydro-élastique peut présenter l'avantage de pouvoir être agencé sur de multiples giravions, y compris sur des giravions de gros tonnage.

L'amortisseur hydro-élastique peut de plus comporter une ou plusieurs des caractéristiques qui suivent.

Selon un aspect, la chambre de compression peut être délimitée axialement au moins par un bouchon obturant l'extrémité interne et un bord de l'organe élastique, la chambre de compression étant délimitée radialement au moins par le cylindre externe.

La chambre de compression peut aussi être fermée axialement par une paroi solidaire de l'armature externe, à savoir une paroi de cette armature externe, ou par un carter de l'ensemble d'amortissement par exemple.

Selon un aspect, l'ensemble d'amortissement peut comprendre un ressort de rappel poussant le piston vers le fond selon un sens transversal allant du piston vers le fond.

Un tel ressort de rappel peut favoriser le déplacement du fluide de la chambre d'expansion vers la ou les chambres de compression lorsque l'amortisseur hydro-élastique est étiré.

De manière complémentaire ou alternative, de l'air comprimé peut être emprisonné dans une chambre délimitée partiellement par le piston. Ce piston subdivise alors un espace en la chambre d'expansion et une chambre contenant cet air et/ou le ressort de rappel. Cet air peut se comporter comme un ressort.

Selon un aspect, la direction transversale peut être orthogonale à l'axe longitudinal.

Cette caractéristique peut permettre d'optimiser le placement d'un axe de translation du piston.

Selon une réalisation, la direction transversale peut présenter un angle avec l'axe longitudinal compris dans une plage allant de 80 degrés inclus à 90 degrés inclus.

Selon un aspect, la direction transversale peut être configurée pour être coaxiale à une force centrifuge exercée sur le piston lorsque ledit amortisseur hydro-élastique est agencé sur un rotor d'aéronef, ledit sens transversal étant configuré pour être confondu avec ladite force centrifuge.

Cette orientation de la direction transversale de déplacement du piston au sein d'un rotor peut tendre à optimiser la durée de vie du piston, et/ou notamment d'un joint dynamique solidaire du piston et/ou de bagues de guidage du piston... Le piston doit se déplacer en allant à l'encontre de la force centrifuge lorsque l'amortisseur hydro-élastique est comprimé, éventuellement en comprimant un ressort de rappel. A l'inverse, la force centrifuge favorise le déplacement du piston vers le fond lorsque l'amortisseur hydro-élastique est étiré.

Selon un aspect, l'ensemble d'amortissement peut comporter une ouverture de remplissage en communication fluidique avec la chambre d'expansion, cette ouverture de remplissage étant obturée par un bouchon.

Les chambres de compression et d'expansion peuvent alors être remplies par cette ouverture de remplissage.

Selon une première réalisation, l'amortisseur hydro-élastique peut comprendre un unique ensemble élastique et ledit ensemble d'amortissement est solidaire d'une tête de liaison alignée avec une tête de liaison dudit unique ensemble élastique.

Le terme « alignée » signifie que les têtes de liaison s'étendent le long de l'axe longitudinal. De plus, lorsque les têtes de liaison sont des têtes munies d'articulations à rotule définissant chacune un centre d'articulation, ces têtes de liaison comportent respectivement deux centres d'articulation présents sur cet axe longitudinal.

Selon une deuxième réalisation, l'amortisseur hydro-élastique peut comprendre deux ensembles élastiques, lesdits deux ensembles élastiques étant positionnés de part et d'autre de la chambre d'expansion, deux têtes de liaison des deux ensembles élastiques étant alignées.

L'amortisseur hydro-élastique comporte alors un corps hydraulique positionné entre deux ensembles élastiques. Chaque ensemble élastique délimite une chambre de compression reliée à la chambre d'expansion par au moins trois liaisons. Lorsque l'amortisseur hydro-élastique est comprimé, les deux ensembles élastiques sont comprimés et expulsent du fluide dans la chambre d'expansion.

Par rapport à la première réalisation et à sollicitation équivalente, les armatures interne et externe de chaque ensemble élastique se déplacent l'une par rapport à l'autre sur une distance de l'ordre de la moitié de la distance parcourue par une armature de la première réalisation. Les deux blocs élastiques de la deuxième réalisation peuvent éventuellement être sous-dimensionnés et/ou peuvent avoir une durée de vie optimisée.

Indépendamment de la réalisation, la deuxième zone extrémale ou l'extrémité interne peut être configurée pour être solidarisée à l'ensemble d'amortissement.

Cet agencement peut faciliter l'obtention d'une architecture modulaire
Alternativement, l'armature externe ou l'armature interne peut être une partie d'un carter qui délimite la chambre d'expansion.

Selon un autre aspect, l'ensemble d'amortissement peut comporter un carter formant une cavité dans laquelle coulisse ledit piston pour former ladite chambre d'expansion, ledit carter étant traversé localement par lesdites trois liaisons associées à chaque ensemble élastique.

Une paroi du carter forme ainsi le fond de la cavité, la chambre d'expansion étant délimitée par ce fond et le piston. Le piston subdivise donc la cavité pour délimiter la chambre d'expansion.

Selon un autre aspect, l'ensemble d'amortissement peut comporter un siège fixé au carter, un ressort de rappel étant éventuellement en appui sur ledit siège, ledit ensemble d'amortissement comprenant au moins une tige solidaire du piston, ladite tige étant montée coulissante au travers d'un orifice de guidage dudit siège.

Par exemple, le siège peut être vissé au carter. Ce siège peut prendre la forme d'un bouchon.

La tige peut aussi représenter un indicateur visuel permettant d'estimer la position du piston, et donc le niveau de fluide dans l'amortisseur. Si la tige est trop enfoncée par rapport à une position de référence, un opérateur peut en déduire la présence d'une fuite de fluide. Cette position de référence est par exemple illustrée par un trait tracé sur la tige
Selon un autre aspect, l'ensemble d'amortissement peut comporter une paroi traversée par lesdites trois liaisons, ladite paroi délimitant partiellement ladite chambre de compression.

La paroi peut être une paroi d'un carter de l'ensemble d'amortissement ou une paroi obturant un cylindre externe de l'armature externe par exemple.

Selon un autre aspect, l'ensemble d'amortissement peut comporter un cylindre de liaison fixé à un cylindre externe de ladite armature externe ou au cylindre interne par des moyens de fixation réversibles.

Les moyens de fixation réversibles sont des moyens non destructeurs, et peuvent par exemple comprendre des moyens de vissage et/ou d'agrafage et/ou de brochage...

L'armature externe ou l'armature interne d'un ensemble élastique peut alors être fixée à un carter de l'ensemble d'amortissement. Eventuellement, un joint statique peut être positionné entre l'armature externe ou l'armature interne et le carter. En effet, en cas de compression ou d'étirement l'armature interne est alors déplacée par rapport à l'armature externe.

Selon un autre aspect, le cylindre de liaison peut être en appui contre un épaulement dudit cylindre externe.

Selon un autre aspect, l'organe élastique comporte au moins un bloc en élastomère.

Selon un autre aspect, ledit au moins un ensemble élastique comporte un tampon agencé dans la chambre de compression, un jeu radial séparant ledit tampon et un cylindre géométrique, le cylindre géométrique contenant une interface entre l'organe élastique et une desdites armature interne et armature externe dépourvue de ce tampon, ledit tampon étant en regard d'un bord dudit organe élastique selon l'axe longitudinal.

Un tel tampon peut participer à la protection de l'organe élastique en tendant à protéger le bord de l'organe élastique de pics de pression dans la chambre de compression et /ou en empêchant une circulation de fluide chaud vers ce bord.

Par ailleurs, un aéronef peut être muni d'un rotor participant au moins à la sustentation de cet aéronef, ledit rotor comprenant un moyeu portant une pluralité d'ensembles sustentateurs et au moins un amortisseur hydro-élastique selon l'invention.

En particulier, le rotor peut comporter des amortisseurs hydro-élastique interpales.

Dès lors, chaque ensemble sustentateur est agencé circonférentiellement entre deux autres ensembles sustentateurs et est relié à ces deux autres ensembles sustentateurs respectivement par deux amortisseurs hydro-élastique. Chaque amortisseur hydro-élastique est alors articulé à une pale et à une pale adjacente.

L'invention et ses avantages apparaîtront avec plus de détails dans le cadre de la description qui suit avec des exemples donnés à titre illustratif en référence aux figures annexées qui représentent :
- la figure 1, des schémas présentant un amortisseur hydro-élastique muni un ensemble élastique,
- la figure 2, un schéma montrant un amortisseur hydro-élastique muni d'une armature externe pourvue d'une extrémité de fixation,
- la figure 3, un schéma montrant un amortisseur hydro-élastique muni d'un tampon,
- la figure 4, un schéma montrant un amortisseur hydro-élastique à deux ensembles élastiques,
- la figure 5, un diagramme montrant une loi triple pente appliqué par l'amortisseur hydro-élastique des figures 1 à 5,
- les figures 6 à 9, des schémas explicitant le fonctionnement d'un amortisseur hydro-élastique selon l'invention,
- la figure 10, un schéma montrant un rotor muni d'amortisseurs hydro-élastiques selon l'invention, et
- la figure 11, un schéma montrant un aéronef muni d'amortisseurs hydro-élastiques selon l'invention.

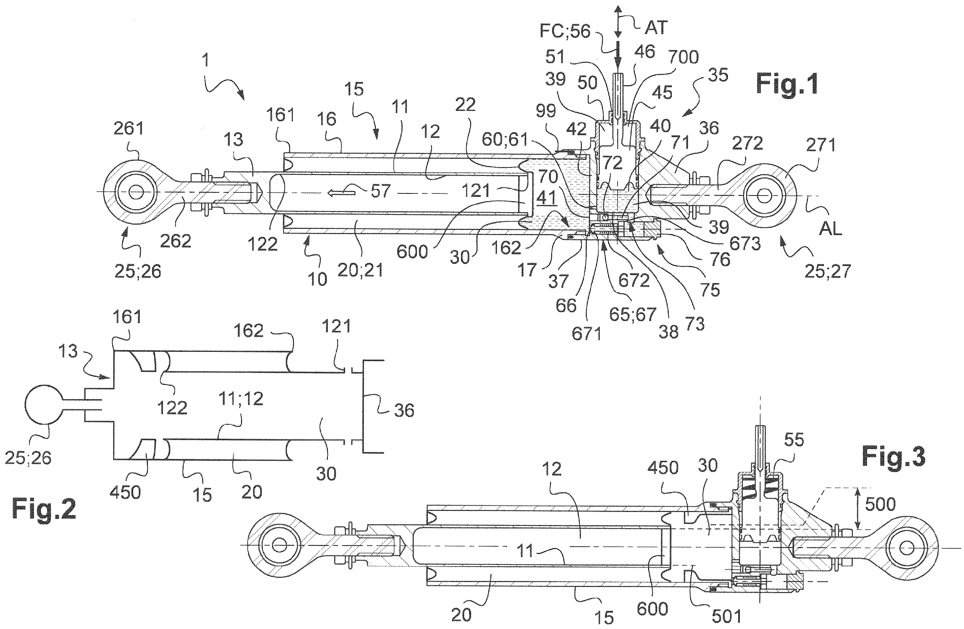

La figure 1 présente une réalisation d'un amortisseur hydro-élastique selon l'invention.

Indépendamment de la réalisation, l'amortisseur hydro-élastique 1 inclut au moins un ensemble élastique 10.

Chaque ensemble élastique 10 comprend une armature interne 11. Cette armature interne 11 peut posséder une unique pièce monobloc d'un seul tenant ou encore plusieurs pièces fixées les unes aux autres.

L'armature interne 11 peut comprendre un cylindre interne 12 qui est creux. Ce cylindre interne 11 peut avoir une base circulaire par exemple, ou d'autres formes telles que par exemple une forme polygonale. Le cylindre interne peut s'étendre longitudinalement le long d'un axe longitudinal AL d'une extrémité dite « extrémité interne 121 » jusqu'à une extrémité dite « extrémité externe 122 ». L'axe longitudinal AL peut être un axe de symétrie du cylindre interne. Les efforts de compression et d'étirement exercés sur l'amortisseur hydro-élastique sont éventuellement dirigés le long de cet axe longitudinal AL.

Chaque ensemble élastique comprend en outre une armature externe 15. Cette armature externe 15 peut posséder une unique pièce monobloc d'un seul tenant ou encore plusieurs pièces fixées les unes aux autres.

L'armature externe 15 entoure au moins partiellement l'armature interne 11, et par exemple au moins une partie du cylindre interne 12.

Ainsi, l'armature externe 15 peut comprendre un cylindre externe 16 qui est creux. Le cylindre externe 16 peut entourer au moins partiellement le cylindre interne 12. Le cylindre externe 16 et le cylindre interne 12 peuvent être coaxiaux. Ce cylindre externe 16 peut avoir une base circulaire par exemple, ou d'autres formes de base. Le cylindre externe 16 peut s'étendre longitudinalement le long de l'axe longitudinal AL d'une portion d'extrémité dite « première zone extrémale 161 » jusqu'à une portion d'extrémité dite « deuxième zone extrémale 162 ».

Par ailleurs, chaque ensemble élastique 10 comprend un organe élastique 20 reliant l'armature externe 15 à l'armature interne 11 en autorisant au moins un degré de liberté en translation selon l'axe longitudinal AL à l'armature interne par rapport à l'armature externe.

L'organe élastique 20 s'étend radialement, à savoir perpendiculairement à l'axe longitudinal AL entre au moins une face du cylindre interne 12 et une face du cylindre externe 16 en regard l'une de l'autre.

L'organe élastique 20 peut comporter au moins un bloc 21 en élastomère, et notamment un bloc d'élastomère fixé au cylindre interne et au cylindre externe. L'organe élastique peut ainsi comprendre un ou plusieurs blocs d'élastomère annulaire.

L'organe élastique peut comprendre des sous-ensembles élastiques d'un autre type, par exemple des ressorts ou équivalents.

L'expression « organe élastique » désigne ainsi un sous-ensemble reliant l'armature interne à l'armature externe qui se déforme élastiquement en cas de déplacement en translation relatif entre l'armature interne 11 et l'armature externe 15.

Selon l'alternative de la figure 1, l'armature interne 11 peut comprendre une extrémité de fixation 13 qui prolonge selon l'axe longitudinal AL le cylindre interne 12, en étant accolée à l'extrémité externe 122. Cette extrémité de fixation 13 ferme le cylindre interne au niveau de son extrémité externe 122 alors que l'extrémité interne 121 est au contraire ouverte sur l'extérieur et éventuellement obturée par un bouchon 600. L'extrémité de fixation 13 peut être fixée au cylindre interne 12 par des moyens usuels de vissage, soudage, rivetage... ou l'extrémité de fixation 13 et le cylindre interne 12 peuvent représenter deux tronçons d'une même pièce unitaire. Indépendamment de cet aspect, L'armature interne 11 a alors une forme de C en coupe longitudinale et délimite un espace interne ouvert sur l'extérieur de cette armature interne au niveau de l'extrémité interne 121, et éventuellement obturée par le bouchon 600.

Par ailleurs, une tête de liaison 25 dite « première tête de liaison 26 » est rendue solidaire de l'extrémité de fixation 13. Cette première tête de liaison 26 est solidaire au moins en translation selon l'axe longitudinal AX de l'armature interne 11. Cette première tête de liaison 26 peut être intégrée à l'armature interne 11 ou peut lui être fixée par des moyens usuels. Par exemple, la première tête de liaison 26 comporte une tête rotulée 261 solidaire d'un pied 262, la tête rotulée 261 pouvant être munie d'une articulation à rotule centrée sur l'axe longitudinal AL et/ou le pied 262 pouvant être vissé à l'extrémité de fixation 13.

En outre, la première zone extrémale 161 peut être ouverte. La deuxième zone extrémale 162 peut être ouverte selon l'exemple de la figure 1, mais peut aussi être obturée par une paroi percée. Selon l'exemple de la figure 1, la première zone extrémale 161 entoure l'armature interne alors que la deuxième zone extrémale 162 dépasse longitudinalement l'extrémité interne 121 de l'armature interne 11.

Selon l'alternative de la figure 2, l'extrémité de fixation 13 est rendue solidaire non pas de l'armature interne mais de l'armature externe 15. L'armature externe 15 comporte alors l'extrémité de fixation 13 qui prolonge selon l'axe longitudinal AL le cylindre externe 16, en étant accolée à la première zone extrémale 161

Indépendamment de l'alternative et en référence à la figure 1, l'amortisseur hydro-élastique 1 comporte une chambre de compression 30 par ensemble élastique 10. Chaque chambre de compression 30 est ainsi ménagée notamment au sein de l'ensemble élastique 10 correspondant, en étant délimitée par exemple au moins partiellement par une des armatures. Eventuellement, l'extrémité interne 121 est obturée par un bouchon 600 pour minimiser le volume de la chambre de compression afin que l'espace interne délimité par le cylindre interne ne fasse pas partie de la chambre de compression. Par exemple une chambre de compression 30 est délimitée axialement selon un sens longitudinal 57 parallèle à l'axe longitudinal AL par le bouchon 600 et un bord 22 de l'organe élastique 20 d'un ensemble élastique, et radialement au moins par l'armature externe 15. La chambre de compression 30 peut être délimitée axialement selon un sens opposé au sens longitudinal 57 par une paroi 42 de l'armature externe 15 ou d'un autre organe de l'amortisseur hydro-élastique 1.

Chaque chambre de compression 30 présente un volume qui varie en fonction de la position relative de l'armature interne 11 et de l'armature externe 15 de l'ensemble élastique correspondant. En particulier, le volume de la chambre de compression 30 diminue lorsque l'amortisseur hydro-élastique est comprimé et augmente lorsque l'amortisseur hydro-élastique est en extension.

Selon un autre aspect, la figure 3 illustre la possibilité d'agencer un tampon 450 dans la chambre de compression 30. Ce tampon 450 est par exemple accolé à l'armature interne 11 ou à l'armature externe 15, l'armature externe 15 selon l'exemple représenté. Le tampon 450 est fixé à une armature ou à un autre organe de l'amortisseur. Un jeu radial 500 sépare ledit tampon 450 et un cylindre géométrique 501 pour que le tampon n'entrave pas le mouvement relatif de l'armature interne et de l'armature externe, le cylindre géométrique 501 contenant une face de l'organe élastique 20 disposée contre une desdites armature interne 11 et armature externe 15 dépourvue de ce tampon 450. Le tampon 450 est en regard d'un bord 22 dudit organe élastique 20 selon l'axe longitudinal AL, un jeu axial séparant le tampon 450 et ce bord 22. Le tampon 450 peut permettre de créer une perte de charge pour protéger le bord 22 de l'organe élastique de pics de pression survenant dans la chambre de compression et de réduire les échanges thermiques entre une zone chaude de la chambre de compression et l'organe élastique.

Selon un autre aspect et en référence à la figure 1, l'amortisseur hydro-élastique 1 inclut un ensemble d'amortissement 35 comprenant une chambre d'expansion 40 à volume variable, et éventuellement une unique chambre d'expansion 40.

Selon l'alternative de cette figure 1, la deuxième zone extrémale 162 de chaque armature externe est configurée pour être solidarisée à l'ensemble d'amortissement 35. Selon une autre alternative, l'extrémité interne de l'armature interne peut être configurée pour être solidarisée à l'ensemble d'amortissement 35.

Selon un autre aspect et la première réalisation de la figure 1, l'amortisseur hydro-élastique 1 comprend un unique ensemble élastique 10. Dès lors, l'ensemble d'amortissement 35 peut être solidaire d'une tête de liaison 25 dite deuxième tête de liaison 27. Cette deuxième tête de liaison 27 est solidaire au moins en translation selon l'axe longitudinal AL de l'ensemble d'amortissement 35, cet ensemble d'amortissement 35 étant solidaire de l'armature externe au moins en translation selon l'axe longitudinal AL, ou de l'armature interne selon l'alternative choisie. Cette deuxième tête de liaison 27 peut être intégrée à l'ensemble d'amortissement 35 ou peut lui être fixée par des moyens usuels. Par exemple, la deuxième tête de liaison 27 comporte une tête rotulée 271 solidaire d'un pied 272, la tête rotulée 271 pouvant être munie d'une articulation à rotule centrée sur l'axe longitudinal AL et/ou le pied pouvant être vissé à l'ensemble d'amortissement 35.

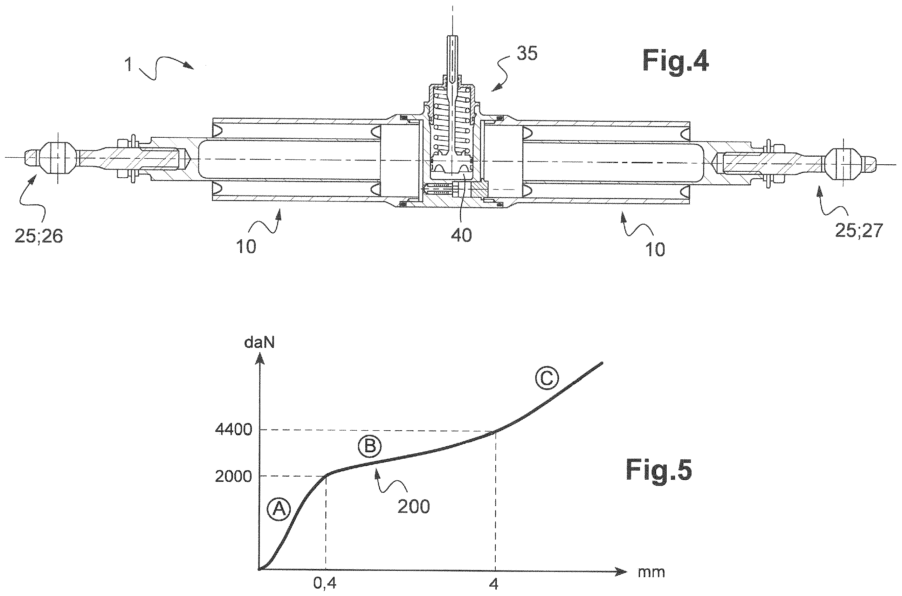

Selon la deuxième réalisation de la figure 4, l'amortisseur hydro-élastique 1 comprend deux ensembles élastiques 10. Les deux ensembles élastiques 10 sont positionnés de part et d'autre de la chambre d'expansion 40. Cet ensemble d'amortissement 35 est solidaire d'au moins une armature externe au moins en translation selon l'axe longitudinal AL, ou d'au moins une armature interne selon l'alternative. Les têtes de liaison 25 des deux ensembles élastiques 10 sont alignées.

Indépendamment de la réalisation et en référence à la figure 1, la chambre d'expansion 40 est ménagée dans une cavité 39 de l'ensemble d'amortissement. En particulier, la chambre d'expansion est délimitée selon une direction transversale AT par un fond 38 de la cavité 39 et un piston 45. Le piston 45 sépare ainsi la chambre d'expansion 40 et une chambre de rappel dans la cavité 39. Ce piston 45 est mobile en translation dans la cavité selon la direction transversale AT. La direction transversale AT peut être orthogonale ou sensiblement orthogonale à l'axe longitudinal AL. La direction transversale AT peut être coaxiale ou sensiblement coaxiale à la force centrifuge FC décrite par la suite.

Dès lors, la chambre d'expansion 40 a un volume qui varie en fonction de la position du piston dans la cavité 39, la variation de ce volume entraînant un déplacement du piston. Un ressort de rappel 55 et/ou de l'air comprimé 700 peuvent être agencé dans la chambre de rappel afin d'exercer un effort sur le piston pour pousser ce piston 45 vers le fond selon un sens transversal 56 allant du piston vers le fond. Le terme « ressort de rappel 55 » peut désigner un ressort en tant que tel ou plus généralement un équipement élastique.

Eventuellement, la direction transversale AT peut être configurée pour être coaxiale à une force centrifuge FC qui est exercée sur le piston 45 en fonctionnement, ou sensiblement coaxiale à cette force centrifuge FC à savoir séparée de la force centrifuge FC par un angle aigu inférieur ou égal à 15 degrés. De même, le sens transversal 56 peut être configuré pour être confondu avec ladite force centrifuge FC, ou sensiblement coaxial à cette force centrifuge FC à savoir séparé de la force centrifuge FC par un angle aigu inférieur ou égal à 15 degrés.

La chambre d'expansion 40 et la ou les chambre(s) de compression 30 sont alors remplies par un fluide 41, éventuellement un liquide et par exemple de l'huile. Eventuellement l'ensemble d'amortissement 35 comporte une ouverture de remplissage 75 qui est en communication fluidique avec la chambre d'expansion 40 pour introduire le fluide dans l'amortisseur hydro-élastique 1. Cette ouverture de remplissage 75 est obturée par un bouchon 76.

De plus, la chambre d'expansion 40 est reliée hydrauliquement à chaque chambre de compression 30 par au moins trois liaisons 60, 65, 70 hydrauliques voire uniquement trois liaisons 60, 65, 70 hydrauliques par chambre de compression.

Chaque liaison 60, 65, 70 comporte au moins un tuyau ou équivalent formant un passage dans lequel circule le fluide.

Ainsi, une première liaison 60 comprend uniquement un conduit 61 dans lequel le fluide est laminé lors de son passage au travers de ce conduit. Le conduit peut comprendre un ou plusieurs passages en communication fluidique. Le conduit peut présenter une section constante ou peut comprendre une restriction ayant une section d'une surface inférieure aux autres sections de ce conduit.

Une deuxième liaison 65 comporte au moins un premier passage 66 et un clapet de surpression 67. Ce clapet de surpression 67 est configuré pour autoriser la circulation du fluide dans la deuxième liaison uniquement d'une chambre de compression 30 vers la chambre d'expansion 40 et uniquement lorsqu'une pression du fluide dans la chambre de compression 30 dépasse un seuil.

A titre d'exemple, le clapet de surpression peut comprendre un doigt 671 solidaire d'un ressort 672, ce ressort 672 tendant à pousser le doigt 671 contre le premier passage 66 pour l'obturer. Le ressort 672 peut de plus s'étendre entre le doigt 671 et un écrou 673 qui est mobile en translation et percé en son centre. Cet écrou 673 peut être vissé ou dévissé pour régler la « pré-charge » du ressort 672. Le réglage de la « pré-charge » du ressort 672 permet de régler le seuil de pression dans la chambre de compression à partir duquel le doigt 671 s'écarte du premier passage 66 pour permettre la circulation de fluide. Un deuxième écrou peut permettre de régler la course d'ouverture du clapet de surpression pour régler la courbe suivie par le début de la troisième pente. D'autres types de clapet de surpression peuvent être utilisés.

Une troisième liaison 70 comporte au moins un deuxième passage 71 et un clapet antiretour 73. Le clapet antiretour 73 est configuré pour autoriser la circulation du fluide dans la troisième liaison uniquement de la chambre d'expansion 40 vers la chambre de compression 30 et uniquement lorsqu'une pression du fluide dans la chambre de compression 30 est inférieure à une pression du fluide dans la chambre d'expansion 40.

A titre d'exemple, le clapet antiretour peut comprendre une bille 72 mobile et apte à obturer ou à ne pas obturer le deuxième passage 71.

Selon l'exemple de la figure 1, l'ensemble d'amortissement 35 peut comporter un carter 36. Ce carter 36 peut posséder une unique pièce monobloc d'un seul tenant ou encore plusieurs pièces fixées les unes aux autres. Le carter 36 délimite notamment la cavité 39 dans laquelle coulisse le piston 45. Un joint dynamique peut être agencé entre le piston 45 et le carter 36. Un siège 50 peut être fixé au carter 36 pour délimiter la cavité 39, le piston 45 subdivisant cette cavité pour la séparer en une chambre d'expansion 40 et une chambre de travail. Le ressort de rappel 55 peut le cas échéant alors être en appui sur le siège 50 et une face du piston 45, ce ressort de rappel 55 s'étendant dans la chambre de travail. Eventuellement, au moins une tige 46 est solidaire du piston 45 en translation. Cette tige 46 peut être montée coulissante au travers d'un orifice de guidage 51 du siège 50. Le siège peut de plus comprendre un voyant de niveau de fluide. La tige 46 peut comprendre au moins une marque permettant d'identifier sa position au regard d'une position de référence.

De plus, la carter 36 est traversé pour chaque ensemble élastique par les trois liaisons 60, 65, 70 associées, les liaisons étant en communication fluidique avec la chambre d'expansion 40.

Ainsi, le conduit 61 de la première liaison 60 s'étend au moins dans le carter.

De plus, un premier passage et le clapet de surpression de la deuxième liaison peuvent aussi être présents dans le carter 36.

De même, le deuxième passage 71 et le clapet antiretour 70 de la troisième liaison peuvent aussi être présents au moins dans le carter 36.

Une paroi 42 du carter 36 peut ainsi être traversée par les trois liaisons 60, 65, 70. Cette paroi 42 peut de plus éventuellement délimiter partiellement la chambre de compression 30 selon l'axe longitudinal. Eventuellement, une cloison d'un ensemble élastique solidaire de l'armature interne ou de l'armature externe peut aussi être traversée par les liaisons 60, 65, 70.

Par ailleurs, l'ensemble d'amortissement 35 et éventuellement le carter 36 peuvent comporter un cylindre de liaison 37 par ensemble élastique. En fonction de l'alternative de l'ensemble élastique, le cylindre de liaison 37 peut être fixé au cylindre externe 16 ou au cylindre interne 12 par des moyens 99 de fixation réversibles. A titre d'exemple, ces moyens 99 de fixation réversibles peuvent comprendre des vis. Le cylindre de liaison 37 peut être en appui contre un épaulement 17 du cylindre externe 16 ou du cylindre interne selon la variante. Un joint statique peut être disposé entre le cylindre de liaison 37 et le cylindre de l'ensemble élastique fixé à ce cylindre de liaison.

La figure 5 présente un diagramme illustrant un effort de compression qui varie en fonction du déplacement relatif de l'armature interne par rapport à l'armature externe d'un amortisseur hydro-élastique selon l'invention. Ce diagramme présente ledit déplacement en millimètres (mm) en abscisses et ledit effort en décaNewtons (daN) en ordonnées. Cet effort suit une loi 200 à trois pentes A, B, C. Les chiffres fournis sont donnés à titre illustratif.

Les figures 1 et 6 à 9 explicitent le fonctionnement de l'amortisseur hydro-élastique 1. Ce fonctionnement est décrit en partant de la réalisation de la figure 1 par commodité. Toutefois, les diverses variantes de l'invention fonctionnent de manière similaire.

La figure 1 présente l'amortisseur hydro-élastique 1 au repos.

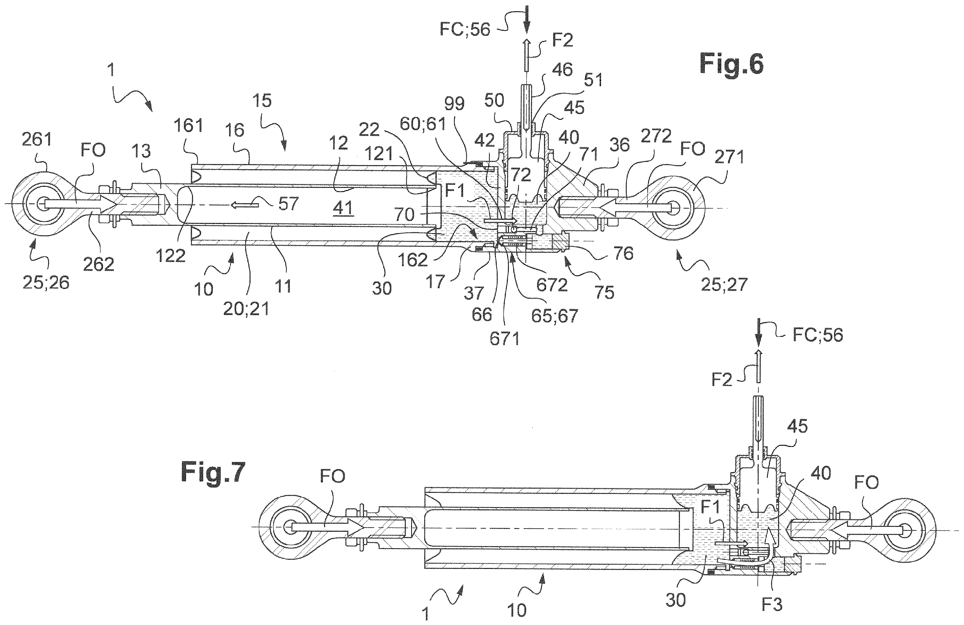

En référence à la figure 6, lorsque l'amortisseur hydro-élastique 1 est comprimé alors la première tête de liaison 26 et la deuxième tête de liaison 27 se déplacent longitudinalement l'une vers l'autre selon les flèches F0. Ce rapprochement est autorisé par un déplacement de l'armature interne 11 par rapport à l'armature externe 15 de chaque ensemble élastique en déformant l'organe élastique 20 correspondant.

Dès lors, le volume de la chambre de compression 30 est réduit, le fluide 41 s'échappant de la chambre de compression 30 en traversant la restriction du conduit 61 de la première liaison selon la flèche F1. Le volume de la chambre d'expansion 40 augmente, le piston 45 s'éloignant du fond selon la flèche F2 en luttant contre la force centrifuge et le cas échéant comprimant un ressort de rappel 55. L'amortisseur hydro-élastique 1 se comporte alors en suivant la première pente A de la loi 200.

En référence à la figure 7, si la compression se poursuit la pression régnant dans la chambre de compression 30 augmente. Dès que cette pression dépasse le seuil d'ouverture du clapet de surpression, ce clapet de surpression s'ouvre progressivement. Le fluide 41 s'échappe de la chambre de compression 30 via le conduit selon la flèche F1 et via la deuxième liaison selon la flèche F3. Le débit du fluide au travers du clapet de surpression augmente progressivement au fur et à mesure de son ouverture. L'amortisseur hydro-élastique se comporte ainsi en suivant la deuxième pente B de la loi 200.

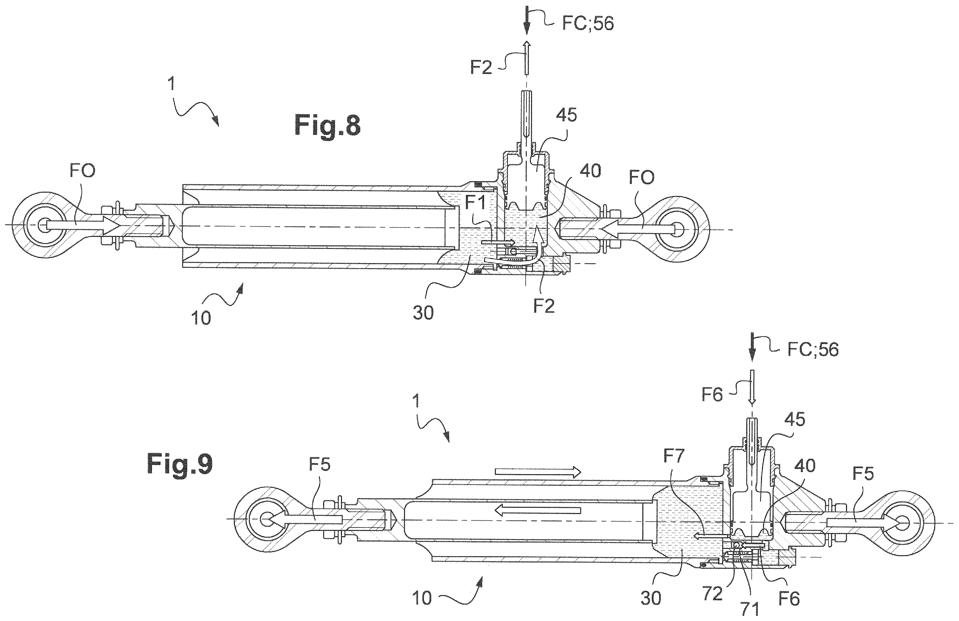

En référence à la figure 8, si la compression se poursuit, le clapet de surpression s'ouvre totalement. Le terme « totalement » signifie que le clapet de surpression est en butée et ne peut donc pas s'ouvrir plus. L'amortisseur hydro-élastique se comporte en suivant la troisième pente C de la loi 200 triple pente décrite précédemment.

En référence à la figure 9, lorsque l'amortisseur hydro-élastique est étiré, la première tête de liaison 26 et la deuxième tête de liaison 27 s'écartent longitudinalement l'une de l'autre selon les flèches F5. La pression du fluide 41 dans la chambre de compression 30 chute brutalement et le clapet de surpression se ferme. A l'inverse, le clapet antiretour 72 de la troisième liaison s'ouvre. Par exemple, une bille 721 se déplace selon la flèche F6 pour ne plus obturer le deuxième passage 723. La chambre d'expansion 40 se vide. Le piston 45 se déplace selon la flèche F6 en se rapprochant du fond pour participer l'évacuation du fluide en dehors de la chambre d'expansion. La force centrifuge FC et le cas échéant le ressort de rappel 55 favorisent ce déplacement en raison de l'orientation de l'axe de déplacement du piston.

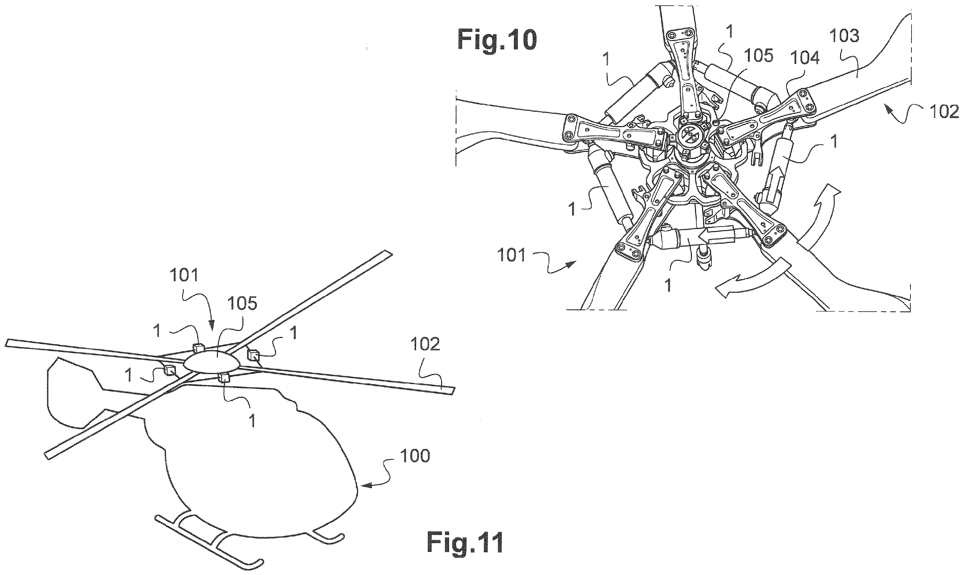

En référence à la figure 10, un tel amortisseur hydro-élastique 1 peut favorablement être fixé à deux ensembles sustentateurs adjacents d'un rotor 101.

Un rotor 101 selon l'invention peut ainsi comprendre un moyeu 105 qui porte une pluralité d'ensembles sustentateurs 102. Chaque ensemble sustentateur 102 peut par exemple comprendre une pale 103 attachée directement au moyeu, par exemple via une butée sphérique, ou encore une pale 103 reliée à un organe de liaison 104 lui-même relié au moyeu. Par exemple, un ensemble sustentateur 102 peut comprendre une pale avec manchon intégré ou une pale fixé à un manchon. Dès lors, chaque ensemble sustentateur est relié à deux ensembles sustentateurs respectivement par deux amortisseurs hydro-élastique 1.

Chaque amortisseur hydro-élastique 1 est alors articulé par sa première tête de liaison à un ensemble sustentateur, par exemple son manchon, et par sa deuxième tête de liaison à un autre ensemble sustentateur, par exemple un manchon de cet autre ensemble sustentateur.

La figure 11 présente un aéronef 100 selon l'invention.

En particulier, l'aéronef 100 peut comporter une cellule portant un rotor 101 du type de la figure 8.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Amortisseur hydro-élastique (1) comprenant au moins un ensemble élastique (10), ledit au moins un ensemble élastique (10) comprenant une armature interne (11) et une armature externe (15) mobiles l'une par rapport à l'autre au moins en translation selon un axe longitudinal, ledit au moins un ensemble élastique (10) comprenant un organe élastique (20) reliant l'armature externe (15) à l'armature interne (11),
dans lequel ledit au moins un ensemble élastique (10) comporte une chambre de compression (30) à volume variable en fonction de la position relative de l'armature interne (11) et de l'armature externe (15), ledit amortisseur hydro-élastique (1) comprenant un ensemble d'amortissement (35) comprenant une chambre d'expansion (40) à volume variable, un fluide (41) étant agencé dans la chambre de compression (30) et la chambre d'expansion (40), ladite chambre de compression (30) étant reliée hydrauliquement à la chambre d'expansion (40) par trois liaisons (60, 65, 70) hydrauliques comprenant respectivement un conduit (61), au moins un premier passage (66) et un clapet de surpression (67) configuré pour autoriser la circulation du fluide uniquement de la chambre de compression (30) vers la chambre d'expansion (40) et uniquement lorsqu'une pression du fluide dans la chambre de compression (30) dépasse un seuil, au moins un deuxième passage (71) et un clapet antiretour (72) configuré pour autoriser la circulation du fluide uniquement de la chambre d'expansion (40) vers la chambre de compression (30) et uniquement lorsqu'une pression du fluide dans la chambre de compression (30) est inférieure à une pression du fluide dans la chambre d'expansion (40), et **caractérise en ce que** ladite chambre d'expansion (40) étant délimitée selon une direction transversale (AT) par un fond (38) et un piston (45), le piston (45) étant mobile en translation selon cette direction transversale (AT).

2. Amortisseur hydro-élastique selon la revendication 1, **caractérisé en ce que** ladite armature externe (15) entoure au moins partiellement l'armature interne (11), l'armature interne (11) comprenant un cylindre interne (12) creux s'étendant le long d'un axe longitudinal (AL) d'une extrémité externe (122) vers une extrémité interne (121), ladite armature externe (15) comportant un cylindre externe (16) qui s'étend d'une première zone extrémale (161) vers une deuxième zone extrémale (162), ladite extrémité externe (122) ou la première zone extrémale (161) étant obturée par une extrémité de fixation (13), une tête de liaison (25) étant solidaire de l'extrémité de fixation (13), ladite chambre de compression (30) étant délimitée au moins partiellement par ladite extrémité de fixation (13) ainsi que ledit cylindre interne (12).

3. Amortisseur hydro-élastique selon la revendication 2, **caractérisé en ce que** ladite chambre de compression (30) est délimitée axialement au moins par un bouchon (600) obturant l'extrémité interne (121) et un bord (22) de l'organe élastique (20), ladite chambre de compression (30) étant délimitée radialement au moins par ledit cylindre externe (16).

4. Amortisseur hydro-élastique selon l'une quelconque des revendications 1 à 3,
**caractérisé en ce que** ladite direction transversale (AT) est orthogonale à l'axe longitudinal (AL).

5. Amortisseur hydro-élastique selon l'une quelconque des revendications 1 à 4,
**caractérisé en ce que** ladite direction transversale (AT) est configurée pour être coaxiale à une force centrifuge (FC) exercée sur le piston (45) lorsque ledit amortisseur hydro-élastique (1) est agencé sur un rotor (101) d'aéronef (100) ou pour présenter un angle inférieur ou égal à 15 degrés avec cette force centrifuge (FC), un sens transversal (56) allant du piston vers le fond étant configuré pour être confondu avec ladite force centrifuge (FC).

6. Amortisseur hydro-élastique selon l'une quelconque des revendications 1 à 5,
**caractérisé en ce que** ledit ensemble d'amortissement (35) comporte une ouverture de remplissage (75) en communication fluidique avec la chambre d'expansion (40), ladite ouverture de remplissage (75) étant obturée par un bouchon (76).

7. Amortisseur hydro-élastique selon l'une quelconque des revendications 1 à 6,
**caractérisé en ce que** ledit amortisseur hydro-élastique (1) comprend un unique ensemble élastique (10) et ledit ensemble d'amortissement (35) est solidaire d'une tête de liaison (25,27) alignée avec une tête de liaison (25,26) dudit unique ensemble élastique (10).

8. Amortisseur hydro-élastique selon l'une quelconque des revendications 1 à 7,
**caractérisé en ce que** ledit amortisseur hydro-élastique (1) comprend deux ensembles élastiques (10), lesdits deux ensembles élastiques (10) étant positionnés de part et d'autre de la chambre d'expansion (40), deux têtes de liaison (25) des deux ensembles élastiques (10) étant alignées.

9. Amortisseur hydro-élastique selon la revendication 2, **caractérisé en ce que** la deuxième zone extrémale (162) ou l'extrémité interne (121) est configurée pour être solidarisée à l'ensemble d'amortissement (35).

10. Amortisseur hydro-élastique selon l'une quelconque des revendications 1 à 9,
**caractérisé en ce que** ledit ensemble d'amortissement (35) comporte un carter (36) formant une cavité (39) dans laquelle coulisse ledit piston (45) pour former ladite chambre d'expansion (40), ledit carter (36) étant traversé localement par lesdites trois liaisons (60, 65, 70).

11. Amortisseur hydro-élastique selon la revendication 10,
**caractérisé en ce que** ledit ensemble d'amortissement (35) comporte un siège (50) fixé au carter (36), ledit ensemble d'amortissement (35) comprenant au moins une tige (46) solidaire du piston (45), ladite tige (46) étant montée coulissante au travers d'un orifice de guidage (51) dudit siège (50).

12. Amortisseur hydro-élastique selon l'une quelconque des revendications 1 à 11,
**caractérisé en ce que** ledit ensemble d'amortissement (35) comporte une paroi (42) traversée par lesdites trois liaisons (60, 65, 70), ladite paroi (42) délimitant partiellement ladite chambre de compression (30).

13. Amortisseur hydro-élastique selon l'une quelconque des revendications 1 à 12,
**caractérisé en ce que** ledit organe élastique (20) comporte au moins un bloc (21) en élastomère.

14. Amortisseur hydro-élastique selon l'une quelconque des revendications 1 à 13,
**caractérisé en ce que** ledit ensemble d'amortissement (35) comprend un ressort de rappel (55) ou de l'air comprimé poussant le piston (45) vers le fond (38) selon un sens transversal (56).

15. Amortisseur hydro-élastique selon l'une quelconque des revendications 1 à 14,
**caractérisé en ce que** ledit au moins un ensemble élastique comporte un tampon (450) agencé dans la chambre de compression, un jeu radial séparant ledit tampon et un cylindre géométrique, le cylindre géométrique contenant une interface entre l'organe élastique et une desdites armature interne et armature externe dépourvue de ce tampon, ledit tampon étant en regard d'un bord dudit organe élastique selon l'axe longitudinal.

16. Amortisseur hydro-élastique selon l'une quelconque des revendications 1 à 15,
**caractérisé en ce que** ladite chambre de compression n'est pas délimitée par ledit piston.

17. Aéronef (100) muni d'un rotor (101) participant au moins à la sustentation de cet aéronef (100), ledit rotor (101) comprenant un moyeu (105) portant une pluralité d'ensembles sustentateurs (102),
**caractérisé en ce que** ledit rotor (101) comporte au moins un amortisseur hydro-élastique (1) selon l'une quelconque des revendications 1 à 16 fixé à au moins un ensemble sustentateur (102).

18. Aéronef selon la revendication 17,
**caractérisé en ce que** chaque ensemble sustentateur (102) est agencé circonférentiellement entre deux dits ensembles sustentateurs (102) et est relié à ces deux dits ensembles sustentateurs (102) respectivement par deux amortisseurs hydro-élastique (1) selon l'une quelconque des revendications 1 à 15.

## Patentansprüche

1. Hydroelastischer Dämpfer (1) mit mindestens einer elastischen Baugruppe (10), wobei die mindestens eine elastische Baugruppe (10) eine innere Armierung (11) und eine äußere Armierung (15) aufweist, die relativ zueinander mindestens in Translation entlang einer Längsachse beweglich sind, wobei die mindestens eine elastische Baugruppe (10) ein elastisches Element (20) aufweist, das die äußere Armierung (15) mit der inneren Armierung (11) verbindet,
bei dem die mindestens eine elastische Anordnung (10) eine Kompressionskammer (30) mit einem in Abhängigkeit von der relativen Position der inneren Armierung (11) und der äußeren Armierung (15) variablen Volumen umfasst, wobei der hydroelastische Dämpfer (1) eine Dämpfungsbaugruppe (35) umfasst, die eine Expansionskammer (40) mit variablem Volumen umfasst, wobei ein Fluid in der Kompressionskammer (30) und der Expansionskammer (40) untergebracht ist, wobei die Kompressionskammer (30) mit der Expansionskammer (40) durch drei hydraulische Verbindungen (60, 65, 70) hydraulisch verbunden ist, die jeweils eine Leitung (61), mindestens einen ersten Durchgang (66) und ein Druckbegrenzungsventil (67), das konfiguriert ist, um einen Fluidstrom nur von der Kompressionskammer (30) zu der Expansionskammer (40) und nur dann zuzulassen, wenn ein Fluiddruck in der Kompressionskammer (30) einen Schwellenwert überschreitet, mindestens einen zweiten Durchgang (71) und ein Rückschlagventil (72) umfassen, das konfiguriert ist, um das Fluid nur von der Expansionskammer (40) zur Kompressionskammer (30) und nur dann fließen zu lassen, wenn ein Druck des Fluids in der Kompressionskammer (30) niedriger ist als ein Druck des Fluids in der Expansionskammer (40), und **dadurch gekennzeichnet, dass** die Expansionskammer (40) in einer Querrichtung (AT) durch einen Boden (38) und einen Kolben (45) begrenzt ist, wobei der Kolben (45) in dieser Querrichtung (AT) translatorisch beweglich ist.

2. Hydroelastischer Dämpfer nach Anspruch 1,
**dadurch gekennzeichnet, dass** die äußere Armierung (15) die innere Armierung (11) zumindest teilweise umgibt, dass die innere Armierung (11) einen hohlen inneren Zylinder (12) umfasst, der sich entlang einer Längsachse (AL) von einem äußeren Ende (122) zu einem inneren Ende (121) erstreckt, dass die äußere Armierung (15) einen äußeren Zylinder (16) umfasst, der sich von einem ersten Endbereich (161) zu einem zweiten Endbereich (162) erstreckt, dass das äußere Ende (122) oder der erste Endbereich (161) durch ein Befestigungsende (13) verschlossen ist, dass ein Verbindungskopf (25) fest mit dem Befestigungsende (13) verbunden ist, dass die Kompressionskammer (30) zumindest teilweise durch das Befestigungsende (13) und den inneren Zylinder (12) begrenzt ist.

3. Hydroelastischer Dämpfer nach Anspruch 2,
**dadurch gekennzeichnet, dass** die Kompressionskammer (30) axial wenigstens durch einen Stopfen (600) begrenzt ist, der das innere Ende (121) und einen Rand (22) des elastischen Elements (20) verschließt, wobei die Kompressionskammer (30) radial wenigstens durch den äußeren Zylinder (16) begrenzt ist.

4. Hydroelastischer Dämpfer nach einem der Ansprüche 1 bis 3,
**dadurch gekennzeichnet, dass** die Querrichtung (AT) orthogonal zur Längsachse (AL) ist.

5. Hydroelastischer Dämpfer nach einem der Ansprüche 1 bis 4,
**dadurch gekennzeichnet, dass** die Querrichtung (AT) so konfiguriert ist, dass sie koaxial zu einer Zentrifugalkraft (FC) ist, die auf den Kolben (45) ausgeübt wird, wenn der hydroelastische Dämpfer (1) auf einem Rotor (101) eines Luftfahrzeugs (100) angeordnet ist, oder dass sie einen Winkel kleiner oder gleich 15 Grad zu dieser Zentrifugalkraft (FC) aufweist, wobei eine Querrichtung (56), die vom Kolben zum Boden verläuft, so konfiguriert ist, dass sie mit der Zentrifugalkraft (FC) zusammenfällt.

6. Hydroelastischer Dämpfer nach einem der Ansprüche 1 bis 5,
**dadurch gekennzeichnet, dass** die Dämpfungsbaugruppe (35) eine Einfüllöffnung (75) in Fluidverbindung mit der Expansionskammer (40) aufweist, und dass die Einfüllöffnung (75) durch einen Stopfen (76) verschlossen ist.

7. Hydroelastischer Dämpfer nach einem der Ansprüche 1 bis 6,
**dadurch gekennzeichnet, dass** der hydroelastische Dämpfer (1) eine einzige elastische Baugruppe (10) umfasst und die Dämpfungsbaugruppe (35) einstückig mit einem Verbindungskopf (25, 27) ausgebildet ist, der auf einen Verbindungskopf (25, 26) der einzigen elastischen Baugruppe (10) ausgerichtet ist.

8. Hydroelastischer Dämpfer nach einem der Ansprüche 1 bis 7,
**dadurch gekennzeichnet, dass** der hydroelastische Dämpfer (1) zwei elastische Baugruppen (10) umfasst, wobei die beiden elastischen Baugruppen (10) auf beiden Seiten der Expansionskammer (40) angeordnet sind, und dass zwei Verbindungsköpfe (25) der beiden elastischen Baugruppen (10) fluchten.

9. Hydroelastischer Dämpfer nach Anspruch 2,
**dadurch gekennzeichnet, dass** der zweite Endbereich (162) oder das innere Ende (121) konfiguriert ist, um an der Dämpfungsbaugruppe (35) befestigt zu werden.

10. Hydroelastischer Dämpfer nach einem der Ansprüche 1 bis 9,
**dadurch gekennzeichnet, dass** die Dämpfungsbaugruppe (35) ein Gehäuse (36) umfasst, das einen Hohlraum (39) bildet, in dem der Kolben (45) gleitet, um die Expansionskammer (40) zu bilden, wobei das Gehäuse (36) lokal von den drei Verbindungen (60, 65, 70) durchquert wird.

11. Hydroelastischer Dämpfer nach Anspruch 10,
**dadurch gekennzeichnet, dass** die Dämpfungsbaugruppe (35) einen Sitz (50) umfasst, der am Gehäuse (36) befestigt ist, dass die Dämpfungsbaugruppe (35) mindestens eine fest mit dem Kolben (45) verbundene Stange (46) umfasst, und dass die Stange (46) durch eine Führungsöffnung (51) des Sitzes (50) gleitbeweglich montiert ist.

12. Hydroelastischer Dämpfer nach einem der Ansprüche 1 bis 11,
**dadurch gekennzeichnet, dass** die Dämpfungsbaugruppe (35) eine Wand (42) umfasst, die von den drei Verbindungen (60, 65, 70) durchquert wird, wobei die Wand (42) teilweise die Kompressionskammer (30) begrenzt.

13. Hydroelastischer Dämpfer nach einem der Ansprüche 1 bis 12,
**dadurch gekennzeichnet, dass** das elastische Element (20) mindestens einen Block (21) aus Elastomer umfasst.

14. Hydroelastischer Dämpfer nach einem der Ansprüche 1 bis 13,
**dadurch gekennzeichnet, dass** die Dämpfungsbaugruppe (35) eine Rückstell- oder Druckluftfeder (55) aufweist, die den Kolben (45) in einer Querrichtung (56) zu dem Boden (38) hin drückt.

15. Hydroelastischer Dämpfer nach einem der Ansprüche 1 bis 14,
**dadurch gekennzeichnet, dass** die mindestens eine elastische Baugruppe einen in der Kompressionskammer angeordneten Puffer (450), ein radiales Spiel, das den Puffer und einen geometrischen Zylinder trennt, umfasst, wobei der geometrische Zylinder eine Grenzfläche zwischen dem elastischen Element und einer von innerer und äußerer Armierung, die nicht diesen Puffer aufweist, umfasst, wobei der Puffer einem Rand des elastischen Elements entlang der Längsachse gegenüberliegt.

16. Hydroelastischer Dämpfer nach einem der Ansprüche 1 bis 15,
**dadurch gekennzeichnet, dass** die Kompressionskammer nicht durch den Kolben begrenzt ist.

17. Luftfahrzeug (100) mit einem Rotor (101), der zumindest zum Auftrieb dieses Luftfahrzeugs (100) beiträgt, wobei der Rotor (101) eine Nabe (105) aufweist, die eine Mehrzahl von Auftriebsbaugruppen (102) trägt,
**dadurch gekennzeichnet, dass** der Rotor (101) mindestens einen hydroelastischen Dämpfer (1) nach einem der Ansprüche 1 bis 16 aufweist, der an mindestens einer Auftriebsbaugruppe (102) befestigt ist.

18. Luftfahrzeug nach Anspruch 17,
**dadurch gekennzeichnet, dass** jede Auftriebsbaugruppe (102) in Umfangsrichtung zwischen zwei der genannten Auftriebsbaugruppen (102) angeordnet und mit diesen beiden Auftriebsbaugruppen (102) jeweils durch zwei hydroelastische Dämpfer (1) nach einem der Ansprüche 1 bis 15 verbunden ist.

## Claims

1. Hydro-resilient damper (1) comprising at least one resilient assembly (10), the at least one resilient assembly (10) comprising an internal frame (11) and an external frame (15) which can be moved relative to each other at least in terms of translation along a longitudinal axis, the at least one resilient assembly (10) comprising a resilient member (20) which connects the external frame (15) to the internal frame (11),
wherein the at least one resilient assembly (10) comprises a compression chamber (30) having a volume which is variable in accordance with the relative position of the internal frame (11) and the external frame (15), the hydro-resilient damper (1) comprising a damper assembly (35) which comprises an expansion chamber (40) with variable volume, a fluid (41) being arranged in the compression chamber (30) and the expansion chamber (40), the compression chamber (30) being connected hydraulically to the expansion chamber (40) by means of three hydraulic connections (60, 65, 70) which comprise respectively, a conduit (61), at least a first passage (66) and a pressure relief valve (67) which is configured to enable the circulation of the fluid only from the compression chamber (30) to the expansion chamber (40) and only when a pressure of the fluid in the compression chamber (30) exceeds a threshold, at least a second passage (71) and a non-return valve (72) which is configured to enable the circulation of the fluid only from the expansion chamber (40) to the compression chamber (30) and only when a pressure of the fluid in the compression chamber (30) is lower than a pressure of the fluid in the expansion chamber (40), and **characterised in that** the expansion chamber (40) being delimited in a transverse direction (AT) by a base (38) and a piston (45), the piston (45) being movable in translation in this transverse direction (AT).

2. Hydro-resilient damper according to claim 1, **characterised in that** the external frame (15) at least partially surrounds the internal frame (11), the internal frame (11) comprising a hollow internal cylinder (12) which extends along a longitudinal axis (AL) of an external end (122) towards an internal end (121), the external frame (15) comprising an external cylinder (16) which extends from a first extreme zone (161) towards a second extreme zone (162), the external end (122) or the first extreme zone (161) being blocked by a fixing end (13), a connection head (25) being fixedly joined to the fixing end (13), the compression chamber (30) being at least partially delimited by the fixing end (13) and the internal cylinder (12).

3. Hydro-resilient damper according to claim 2,
**characterised in that** the compression chamber (30) is delimited at least axially by a stopper (600) which blocks the internal end (121) and an edge (22) of the resilient member (20), the compression chamber (30) being delimited at least radially by the external cylinder (16).

4. Hydro-resilient damper according to any one of claims 1 to 3,
**characterised in that** the transverse direction (AT) is orthogonal with respect to the longitudinal axis (AL).

5. Hydro-resilient damper according to any one of claims 1 to 4,
**characterised in that** the transverse direction (AT) is configured to be coaxial with a centrifugal force (FC) which is applied to the piston (45) when the hydro-resilient damper (1) is arranged on a rotor (101) of an aircraft (100) or to have an angle less than or equal to 15 degrees with this centrifugal force (FC), a transverse direction (56) which extends from the piston to the base being configured to be aligned with the centrifugal force (FC).

6. Hydro-resilient damper according to any one of claims 1 to 5,
**characterised in that** the damper assembly (35) comprises a filling opening (75) which is in fluid communication with the expansion chamber (40), the filling opening (75) being blocked by a stopper (76).

7. Hydro-resilient damper according to any one of claims 1 to 6,
**characterised in that** the hydro-resilient damper (1) comprises a single resilient assembly (10) and the damper assembly (35) is fixedly joined to a connection head (25, 27) which is aligned with a connection head (25, 26) of the single resilient assembly (10).

8. Hydro-resilient damper according to any one of claims 1 to 7,
**characterised in that** the hydro-resilient damper (1) comprises two resilient assemblies (10), the two resilient assemblies (10) being positioned at one side and the other of the expansion chamber (40), two connection heads (25) of the two resilient assemblies (10) being aligned.

9. Hydro-resilient damper according to claim 2,
**characterised in that** the second extreme zone (162) or the internal end (121) is configured to be fixedly joined to the damper assembly (35).

10. Hydro-resilient damper according to any one of claims 1 to 9,
**characterised in that** the damper assembly (35) comprises a housing (36) which forms a cavity (39) in which the piston (45) slides in order to form the expansion chamber (40), the three connections (60, 65, 70) extending locally through the housing (36).

11. Hydro-resilient damper according to claim 10,
**characterised in that** the damper assembly (35) comprises a seat (50) which is fixed to the housing (36), the damper assembly (35) comprising at least one rod (46) which is fixedly joined to the piston (45), the rod (46) being mounted so as to slide through a guide hole (51) of the seat (50).

12. Hydro-resilient damper according to any one of claims 1 to 11,
**characterised in that** the damper assembly (35) comprises a wall (42) through which the three connections (60, 65, 70) extend, the wall (42) partially delimiting the compression chamber (30).

13. Hydro-resilient damper according to any one of claims 1 to 12,
**characterised in that** the resilient member (20) comprises at least one elastomer block (21).

14. Hydro-resilient damper according to any one of claims 1 to 13,
**characterised in that** the damper assembly (35) comprises a return spring (55) or compressed air which pushes the piston (45) towards the base (38) in a transverse direction (56).

15. Hydro-resilient damper according to any one of claims 1 to 14,
**characterised in that** the at least one resilient assembly comprises a buffer (450) which is arranged in the compression chamber, a radial play separating the buffer and a geometric cylinder, the geometric cylinder containing an interface between the resilient member and one of the internal frame and external frame which does not have this buffer, the buffer being opposite an edge of the resilient member along the longitudinal axis.

16. Hydro-resilient damper according to any one of claims 1 to 15,
**characterised in that** the compression chamber is not delimited by the piston.

17. Aircraft (100) provided with a rotor (101) which is involved at least in the lift of this aircraft (100), the rotor (101) comprising a hub (105) which carries a plurality of lift assemblies (102),
**characterised in that** the rotor (101) comprises at least one hydro-resilient damper (1) according to any one of claims 1 to 16 fixed to at least one lift assembly (102).

18. Aircraft according to claim 17,
**characterised in that** each lift assembly (102) is arranged circumferentially between two lift assemblies (102) and is connected to these two lift assemblies (102) by two hydro-resilient dampers (1) according to any one of claims 1 to 15, respectively.
